# EUROPÄISCHE PATENTSCHRIFT

(11) **EP 3 748 312 B1**
(45) Veröffentlichungstag und Bekanntmachung des Hinweises auf die Patenterteilung: **01.06.2022**
(21) Anmeldenummer: 19179066.6
(22) Anmeldetag: 07.06.2019
(51) Int. Cl.: G01F 23/28

(54) **MESSGERÄT MIT FLANSCH UND BEHÄLTER MIT DIESEM MESSGERÄT**
MEASURING DEVICE WITH FLANGE AND CONTAINER WITH THIS MEASURING DEVICE
APPAREIL DE MESURE À BRIDE ET RÉCIPIENT AVEC CET APPAREIL DE MESURE

(43) Veröffentlichungstag der Anmeldung: 09.12.2020
(73) Patentinhaber: VEGA Grieshaber KG, 77709 Wolfach (DE)
(72) Erfinder: KRÄMER, Florian, 77796 Mühlenbach (DE); HEIZMANN, Patrick, 77709 Oberwolfach (DE); ALLGAIER, Stefan, 77709 Oberwolfach (DE)
(74) Vertreter: Maiwald Patent- und Rechtsanwaltsgesellschaft mbH

(56) Entgegenhaltungen:
- DE-A1- 10 028 807
- GB-A- 314 569
- GB-A- 1 285 168
- US-A- 4 355 828
- US-A1- 2004 154 392
- US-A1- 2018 113 020

## Beschreibung

### Gebiet der Erfindung

Die Erfindung betrifft Messgeräte im industriellen Umfeld. Insbesondere betrifft die Erfindung ein Messgerät zur Anbringung an oder in einer Öffnung eines Behälters, einen Flansch, eingerichtet zur Anbringung an oder in einer Öffnung eines Behälters, und einen Behälter mit einem daran angebrachten Messgerät oder einem daran angebrachten Flansch.

### Hintergrund

Messgeräte im industriellen Umfeld können zur Füllstandmessung, Grenzstanderfassung, Durchflussmessung, Druckmessung, Pegel- und Durchflussmessung oder Temperaturmessung vorgesehen sein. Derartige Feldgeräte, im Folgenden auch als Messgeräte bezeichnet, können zur Anbringung an oder in einer Öffnung eines Behälters ausgeführt sein. Diese Befestigung erfolgt entweder mittels einer Flanschbefestigung oder einer Einschraubbefestigung. Bei der Flanschbefestigung weist das Messgerät, beispielsweise ein Füllstandmessgerät, einen tellerförmigen Flansch auf, welcher den Antennenhals des Geräts flanschartig umgibt, um mit einem entsprechenden Gegenflansch im Bereich der Öffnung des Behälters verschraubt zu werden.

Bei der Einschraubbefestigung ist der Antennenhals selbst mit einem Außengewinde ausgestattet, so dass das Füllstandmessgerät über das Außengewinde in ein entsprechendes Innengewinde in einer entsprechenden Behälteröffnung eingeschraubt werden kann.

Außerdem besteht die Möglichkeit, Sensoren mittels Montageklammern oder Klammerbügeln zu befestigen.

DE 100 28 807 A1 beschreibt ein Füllstandmessgerät mit einer Flanschverbindung, die auf einen Behälter aufgeschraubt wird.

DB 1 285 168 A beschreibt ein Messgerät mit einem Außengewinde zum Einschrauben in eine entsprechende Öffnung.

US 2018/0113020 A1 beschreibt ein freistrahlendes Füllstandmessgerät, das auf einem Behälterstutzen aufgeschraubt wird.

### Zusammenfassung

Es ist eine Aufgabe der Erfindung, eine alternative Befestigung von Messgeräten an einem Behälter bereitzustellen.

Diese Aufgabe wird durch den Gegenstand der unabhängigen Patentansprüche gelöst. Weiterbildungen der Erfindung ergeben sich aus den Unteransprüchen und der folgenden Beschreibung von Ausführungsformen.

Ein erster Aspekt der Erfindung betrifft ein Messgerät, eingerichtet zur Anbringung an oder in einer Öffnung eines Behälters. Das Messgerät weist hierfür einen Flansch auf, der eingerichtet ist zur Auflage auf die Oberseite einer Wand des Behälters, welche die Öffnung des Behälters umgibt (einschließt). Es ist eine Spann- oder Spreizvorrichtung vorgesehen, die eingerichtet ist zum Einstellen und Ausüben einer Spann- oder Spreizkraft auf die Unterseite der Wand oder auf die Innenseite der Öffnung, um den Flansch an der Öffnung zu befestigen.

Somit wird eine universale Sensormontage für eine große Anzahl von verschiedenen Öffnungen von Behältern oder sonstigen Messanordnungen ermöglicht.

Ein spezieller Montageflansch muss nicht genutzt werden, selbst wenn keine passende Montageöffnung (zum Beispiel Flansch oder Gewindestutzen) vorhanden ist. Auch muss kein entsprechendes Gewinde am Sensor angebracht werden. Somit kann der Montage- und Fertigungsaufwand reduziert werden.

Je nach Behälterausführung ist darüber hinaus eine Flansch- oder Gewindemontage technisch nicht möglich, beispielsweise bei Behältern aus dünnwandigem Blech oder Kunststoffbehältern. Hier muss der Betreiber individuelle Befestigungsmöglichkeiten schaffen.

Das Messgerät kann mit seinem Flansch und der Spann- oder Spreizvorrichtung mittels Spreiz- und Klemmtechnik am Prozessanschluss einfach und schnell montiert werden. Die Abhängigkeit von speziellen Befestigungsvorrichtungen, wie Flansche oder Gewinde, an der Messstelle entfällt. Eine einfache Öffnung am Behälter oder einer anderweitigen Messanordnung ist ausreichend. Die Öffnung kann beliebig ausgeführt sein, da die Spann- oder Spreizvorrichtung auf verschiedene Öffnungsdurchmesser und Querschnitte einstellen kann, indem sie radial nach außen oder nach innen geschoben wird.

Das Messgerät kann zur Prozessautomatisierung im industriellen Umfeld ausgeführt sein. Unter dem Begriff "Prozessautomatisierung im industriellen Umfeld" kann ein Teilgebiet der Technik verstanden werden, welches alle Maßnahmen zum Betrieb von Maschinen und Anlagen ohne Mitwirkung des Menschen beinhaltet. Ein Ziel der Prozessautomatisierung ist es, das Zusammenspiel einzelner Komponenten einer Werksanlage in den Bereichen Chemie, Lebensmittel, Pharma, Erdöl, Papier, Zement, Schifffahrt oder Bergbau zu automatisieren. Hierzu können eine Vielzahl an Sensoren eingesetzt werden, welche insbesondere an die spezifischen Anforderungen der Prozessindustrie, wie bspw. mechanische Stabilität, Unempfindlichkeit gegenüber Verschmutzung, extremen Temperaturen und extremen Drücken, angepasst sind. Messwerte dieser Sensoren werden üblicherweise an eine Leitwarte übermittelt, in welcher Prozessparameter wie Füllstand, Grenzstand, Durchfluss, Druck oder Dichte überwacht und Einstellungen für die gesamte Werksanlage manuell oder automatisiert verändert werden können.

Ein Teilgebiet der Prozessautomatisierung im industriellen Umfeld betrifft die Logistikautomation. Mit Hilfe von Distanz- und Winkelsensoren werden im Bereich der Logistikautomation Abläufe innerhalb eines Gebäudes oder innerhalb einer einzelnen Logistikanlage automatisiert. Typische Anwendungen finden z.B. Systeme zur Logistikautomation im Bereich der Gepäck- und Frachtabfertigung an Flughäfen, im Bereich der Verkehrsüberwachung (Mautsysteme), im Handel, der Paketdistribution oder aber auch im Bereich der Gebäudesicherung (Zutrittskontrolle). Gemein ist den zuvor aufgezählten Beispielen, dass eine Präsenzerkennung in Kombination mit einer genauen Vermessung der Größe und der Lage eines Objektes von der jeweiligen Anwendungsseite gefordert wird. Hierfür können Sensoren auf Basis optischer Messverfahren mittels Laser, LED, 2D-Kameras oder 3D-Kameras, die nach dem Laufzeitprinzip (time of flight, ToF) Abstände erfassen, verwendet werden.

Ein weiteres Teilgebiet der Prozessautomatisierung im industriellen Umfeld betrifft die Fabrik-/Fertigungsautomation. Anwendungsfälle hierzu finden sich in den unterschiedlichsten Branchen wie Automobilherstellung, Nahrungsmittelherstellung, Pharmaindustrie oder allgemein im Bereich der Verpackung. Ziel der Fabrikautomation ist, die Herstellung von Gütern durch Maschinen, Fertigungslinien und/oder Roboter zu automatisieren, d. h. ohne Mitwirkung des Menschen ablaufen zu lassen. Die hierbei verwendeten Sensoren und spezifischen Anforderungen im Hinblick auf die Messgenauigkeit bei der Erfassung der Lage und Größe eines Objektes sind mit denen der im vorigen Beispiel der Logistikautomation vergleichbar.

Gemäß einer Ausführungsform weist das Messgerät eine Flanschdichtung auf, die an der Flanschunterseite angeordnet ist und eingerichtet ist, bei Ausüben der Spannkraft oder Spreizkraft gegen die Oberseite der Wand des Behälters gepresst zu werden. Durch diese integrierte Dichtung kann sichergestellt werden, dass die Messstelle weiterhin gegen den Prozess abgedichtet werden kann. Somit können Messgeräte mit standardisiertem Prozessanschluss verwendet werden und eine individuelle Ersatzvorhaltung kann entfallen.

Gemäß einer weiteren Ausführungsform weist die Spann- oder Spreizvorrichtung eine Klemmschraube und ein Klemmelement auf, welches sich durch Drehung der Klemmschraube zur Ausübung der Spannkraft in Richtung der Flanschunterseite verschieben lässt.

Darüber hinaus kann ein Rahmen vorgesehen sein, in welchem die Klemmschraube gehalten wird, und welcher sich zusammen mit der Klemmschraube entlang einer schlitzartigen Aussparung im Flansch radial nach außen verschieben lässt, so dass sich die Spann- oder Spreizvorrichtung auf verschiedene Öffnungsdurchmesser und -querschnitte einstellen lässt.

Gemäß einer weiteren Ausführungsform weist der Flansch eine mit einem Innengewinde versehene Öffnung oder Bohrung auf, welche zum Einschrauben eines Messgerätegehäuses eingerichtet ist, welches ein entsprechendes Außengewinde aufweist, um das Messgerätegehäuse an dem Flansch zu befestigen.

Dieses Außengewinde kann sich beispielsweise am Antennenhals befinden.

Gemäß einer weiteren Ausführungsform weist das Messgerät weiterhin eine Spannmutter auf, welche an einem Außengewinde des Messgerätegehäuses angebracht ist. Die Spann- oder Spreizvorrichtung weist einen Spreizbügel auf, wobei der Flansch zwischen der Spannmutter und dem Spreizbügel angeordnet ist, so dass der Flansch beim Einschrauben der Spannmutter gegen den Spreizbügel drückt und diesen zum Erzeugen der Spreizkraft radial nach außen spreizt.

Die im vorhergehenden Absatz beschriebene Befestigungseinrichtung kann alternativ oder zusätzlich zu der weiter oben beschriebenen Befestigungseinrichtung mit der Klemmschraube und dem Klemmelement eingesetzt werden.

Gemäß einer weiteren Ausführungsform weist das Messgerät eine innen liegende, umlaufende Dichtung auf, welche zwischen dem Messgerätegehäuse und dem Flansch angeordnet ist. Insbesondere kann diese umlaufende Dichtung in Form eines Dichtrings oder O-Rings ausgeführt sein.

Gemäß einer weiteren Ausführungsform weist das Messgerät eine zweite Spann- oder Spreizvorrichtung auf, wobei beide Spann- oder Spreizvorrichtungen an dem Flansch gegenüber voneinander angebracht sind.

Gemäß einer weiteren Ausführungsform weist das Messgerät eine zweite und eine dritte Spann- oder Spreizvorrichtung auf. Es können auch noch weitere Spann- oder Spreizvorrichtungen vorgesehen sein. Sämtliche Spann- oder Spreizvorrichtungen sind in dieser Ausführungsform an dem Flansch im selben radialen Abstand zur Mittelpunkt des Flansches angebracht, wobei benachbarte Spann- oder Spreizvorrichtungen denselben Winkel einschließen.

Ein weiterer Aspekt betrifft einen Behälter mit einem oben und im Folgenden beschriebenen, daran angebrachten Messgerät.

Insbesondere kann der Behälter ein Kunststoffbehälter sein oder ein dünnwandiger Blechbehälter. Im Folgenden werden mit Verweis auf die Figuren weitere Ausführungsformen beschrieben. Die Darstellung in den Figuren ist schematisch und nicht maßstäblich. Werden in der folgenden Figurenbeschreibung die gleichen Bezugszeichen verwendet, so bezeichnen diese gleiche oder ähnliche Elemente.

### Kurze Beschreibung der Figuren

Fig. 1 zeigt eine Querschnittsansicht eines Messgeräts gemäß einer ersten Ausführungsform.
Fig. 2 zeigt eine Draufsicht eines Flansches.
Fig. 3 zeigt eine Detailansicht einer Spannvorrichtung.
Fig. 4 zeigt ein Messgerät gemäß einer weiteren Ausführungsform.
Fig. 5 zeigt ein Messgerät und einen Behälter gemäß einer weiteren Ausführungsform.
Fig. 6 zeigt ein Messgerät gemäß einer weiteren Ausführungsform.

### Detaillierte Beschreibung von Ausführungsformen

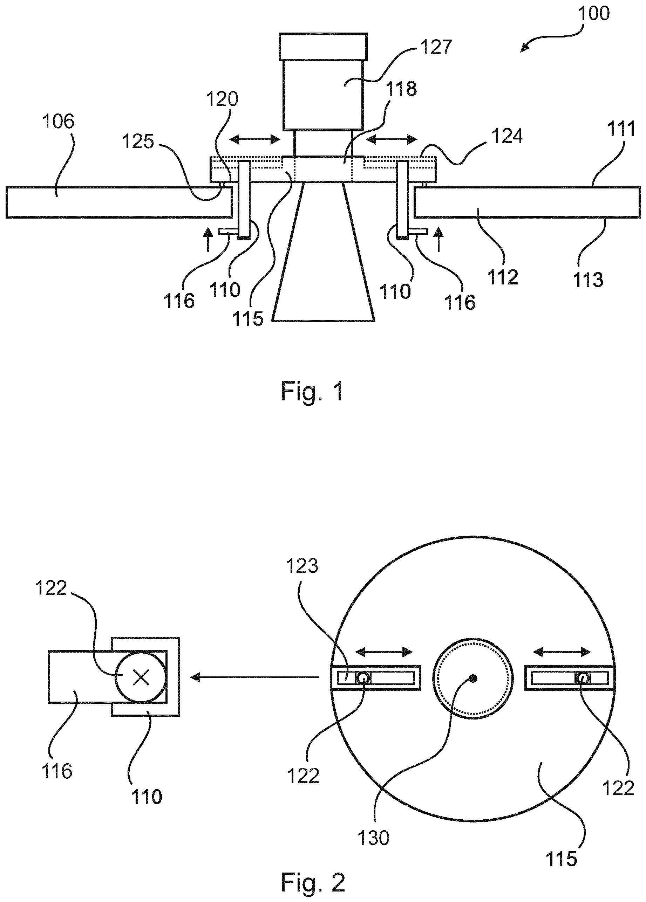

Fig. 1 zeigt ein Messgerät 100 mit einem Flansch 115, der mittels einer Spann- oder Spreizvorrichtung 110, 116 an der Wand 112 eines Behälters 106 befestigt ist.

Das Messgerät 100 weist ein Messgerätegehäuse 127 auf, das auf der prozesszugewandten Seite eine Hornantenne aufweist, mit einem Außengewinde an deren Hals. Dieses Außengewinde ist in die Öffnung 118 des Flansches 115 eingeschraubt. Die Flanschunterseite 120 liegt auf der Oberseite 111 der Behälterwand 112 auf, wobei ein Dichtring 125 zwischen der Flanschunterseite 120 und der Wandoberseite 111 angeordnet sein kann.

Es sind zwei horizontal verschiebbare Spannelemente 110, 116 vorgesehen, welche radial entlang des Flansches nach außen geschoben werden können, bis sie gegen die Behälteröffnung stoßen.

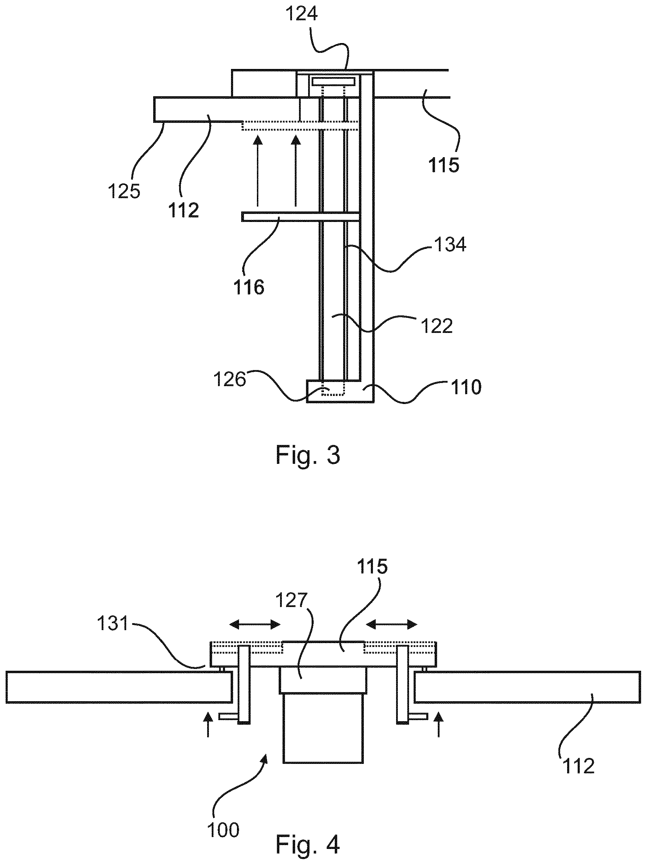

Werden die Klemmschrauben 122 der beiden Spannvorrichtungen 110, 116 betätigt (siehe Fig. 2 und 3), wird die Klemmverbindung 116, beispielsweise in Form eines Klemmbleches, durch die Klemmschraube 122 vertikal nach oben in Richtung der Unterseite 113 der Behälterwand 106 geschoben, wie dies insbesondere in der Fig. 3 dargestellt ist.

Optional kann ein Deckel 124 zur Abdichtung der horizontal verstellbaren Spannvorrichtung 110, 116 vorgesehen sein.

Fig. 2 zeigt eine Draufsicht auf den Flansch der Fig. 1 in einer Gesamtdarstellung (rechts) und einen Ausschnitt in Detailansicht (links). Der Flansch 115 weist zwei einander gegenüberliegende, konzentrisch angeordnete Spannvorrichtungen auf, welche jeweils eine Klemmschraube 122 aufweist. Die Klemmschraube ist horizontal innerhalb der schlitzartigen Aussparung 123 verschiebbar. Wie in der linken Hälfte der Fig. 2 zu sehen, befindet sich die Klemmschraube 122 in einem Rahmen 110, in welchem die Klemmschraube gehalten wird, und welcher sich zusammen mit der Klemmschraube entlang der schlitzartigen Aussparung 123 im Flansch 115 verschieben lässt.

Darüber hinaus kann eine Art Röhre 134 vorgesehen sein, in welcher sich die Klemmschraube befindet. Im unteren Sockelbereich des Rahmens 110 ist eine Aussparung 126 vorgesehen, welche die Spitze der Klemmschraube aufnimmt.

Fig. 4 zeigt eine Anordnung mit einem unterhalb der Dichtebene 131 angebrachten Messgerät, welches von unten in den Flansch 115 eingeschraubt ist.

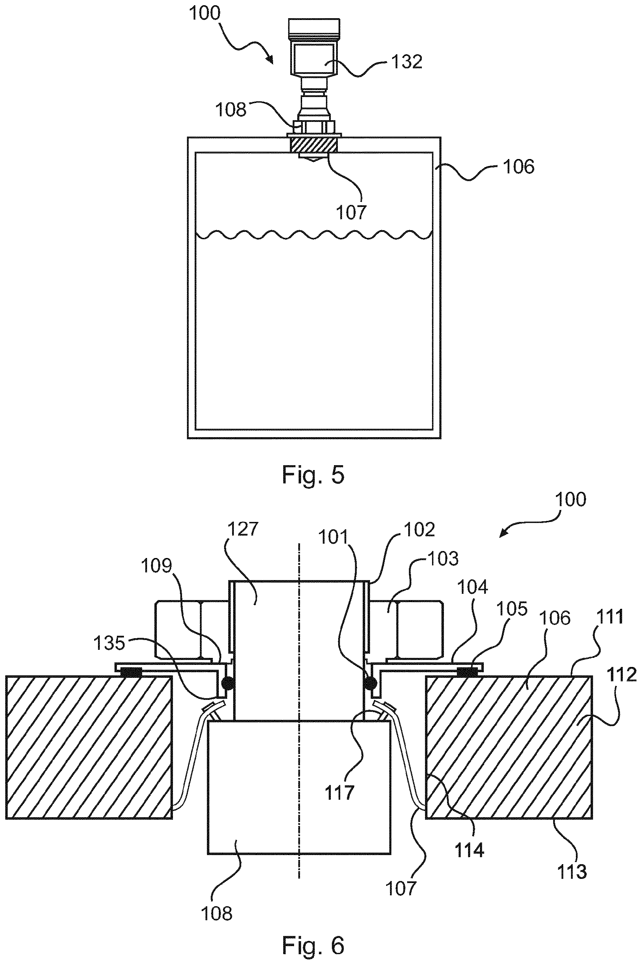

Fig. 5 zeigt ein an einem Behälter 106 befestigtes Messgerät in Form eines Füllstandradars mit einem Elektronikgehäuse 132 und einer Spann- oder Spreizvorrichtung 107.

Fig. 6 zeigt eine detaillierte Schnittansicht einer Spann- oder Spreizvorrichtung. Die Spann- oder Spreizvorrichtung kann auch als Spreiz- und Klemmeinheit bezeichnet werden. Durch eine vorgegebene Öffnung des Behälters 106 wird das Messgerät 100 händisch eingesetzt. Mithilfe der Spannmutter 103, die eine verkürzte Anpressfläche 109 aufweist, wird die Flanschplatte 104 mit Dichtung 105, 101 und Spreizbetätiger 135 gegen die

Behälterwandung, und insbesondere gegen die Oberseite 111 der Behälterwandung 112, gedrückt. Anschließend werden durch die Drehbewegung der Mutter die Spreizbügel 107 durch den Spreizbetätiger 135 und die Bügelaufhängung 117 gegen die Innenseite 114 der Behälteröffnung gedrückt. Durch eine entsprechende Ausführung der Spreizbügel wird die Flanschplatte Richtung der Oberseite 111 der Behälterwand 112 gezogen. Somit kann eine optionale Abdichtung zum Prozess sowie eine sichere Befestigung gewährleistet werden.

Hierfür sind die Spreizbügel 107 S-förmig ausgestaltet, so dass die nach unten gerichtete Druckkraft des Spreizbetätigers 135 auf das eine Ende des Spreizbügels 107 eine radial nach außen gerichtete Bewegung des anderen Endes mit einer überlagerten Nachobenbewegung bedingt.

Die innen liegende Dichtung 101 bewegt sich während des Spannvorgangs auf einer glatten Oberfläche (Gleitfläche), um Deformierung und somit eine Beschädigung der Dichtung zu vermeiden und die Dichtfunktion zu gewährleisten. Durch eine reduzierte Auflagefläche der Spannmutter auf die Flanschplatte 104 werden Reibungskräfte minimiert. Dadurch wird ein Verdrehen der Flanschplatte während des Spannvorgangs vermieden.

Für eine korrekte Montage sind mindestens zwei Spreizbügel 107 vorteilhaft. Es können aber auch drei, vier oder mehr Spreizbügel vorgesehen sein.

Durch die Spreiz- und Klemmtechnik am Sensorprozessanschluss ist eine universelle Montage an Öffnungen an oder über Messgeräten möglich.

Durch die individuell einstellbare Klemmtechnik können bei dünnwandigen Behältern oder sonstigen Messanordnungen, mit einer Öffnung jeglicher Art, Sensoren einfach und schnell und sicher montiert werden.

Durch die Spreiztechnik können bei dickwandigen Behältern mit einer entsprechenden Bohrung (oder Rundöffnung) Messgeräte einfach und schnell sicher montiert werden.

Der Durchmesser der Öffnung im Behälter oder an der Messstelle muss mit der Spreizvorrichtung am Messgerät korrespondieren. Mit verschiedenen Ausführungen der Spreizvorrichtung können verschiedene Durchmesser der Öffnung abgedeckt und abgedichtet werden.

Auch kann vorgesehen sein, dass sowohl für die Spreiz- als auch die Klemmtechnik entsprechende Adapterflansche mit standardisiertem Sensoranschluss (zum Beispiel G ½ Zoll oder NPT-Anschlussgewinde) angeboten werden. Eine Lagerhaltung von Sensoren mit verschiedenen Prozessanschlüssen ist nicht mehr notwendig.

## Patentansprüche

1. Messgerät (100), eingerichtet zur Anbringung an einer Öffnung eines Behälters (106), aufweisend:
einen Flansch (115), eingerichtet zur Auflage auf die Oberseite (111) einer Wand (112) des Behälters, welche die Öffnung des Behälters einschließt;
eine Spann- oder Spreitzvorrichtung (110, 116), eingerichtet zum Einstellen und Ausüben einer Spann- oder Spreitzkraft auf die Unterseite (113) der Wand, um den Flansch an der Öffnung des Behälters zu befestigen;
**dadurch gekennzeichnet, dass**
die Spann- oder Spreitzvorrichtung (110, 116) eine Klemmschraube (122) und ein Klemmelement (116) aufweist, welches sich durch Drehung der Klemmschraube zur Ausübung der Spannkraft in Richtung der Flanschunterseite (120) verschieben lässt, und einen Rahmen (110), in welchem die Klemmschraube (122) gehalten wird, und welcher sich zusammen mit der Klemmschraube entlang einer schlitzartigen Aussparung (123) im Flansch (115) verschieben lässt.

2. Messgerät (100), eingerichtet zur Anbringung in einer Öffnung eines Behälters (106), aufweisend:
einen Flansch (104), eingerichtet zur Auflage auf die Oberseite (111) einer Wand (112) des Behälters, welche die Öffnung des Behälters einschließt;
eine Spann- oder Spreitzvorrichtung (107, 117), eingerichtet zum Einstellen und Ausüben einer Spann- oder Spreitzkraft auf die Innenseite (114) der Öffnung des Behälters, um den Flansch an der Öffnung des Behälters zu befestigen;
**dadurch gekennzeichnet, dass** der Flansch (104) aufweist: eine Öffnung (118), eine
Flanschunterseite (120), eingerichtet zur Auflage auf die Oberseite (111) der Wand (112) des Behälters, welche die Öffnung des Behälters einschließt;
eine Spannmutter (103), welche an einem Außengewinde (102) des Messgerätegehäuses (127) angebracht ist;
wobei die Spann- oder Spreitzvorrichtung (110, 116) einen Spreitzbügel (107) aufweist;
CGS:CGS
wobei der Flansch (104) zwischen der Spannmutter und dem Spreitzbügel angeordnet ist, so dass der Flansch beim Einschrauben der Spannmutter gegen den Spreitzbügel drückt und diesen zum Erzeugen der Spreitzkraft radial nach außen spreitzt.

3. Messgerät (100) nach Anspruch 1 oder 2, weiter aufweisend:
eine Flanschdichtung (105, 125), angeordnet an der Flanschunterseite (120) und eingerichtet, bei Ausüben der Spannkraft oder Spreitzkraft gegen die Oberseite (111) der Wand (112) des Behälters (106) gepresst zu werden.

4. Messgerät (100) nach einem der vorhergehenden Ansprüche,
wobei der Flansch (104, 115) eine mit einem Innengewinde versehene Öffnung (118) aufweist, welche zum Einschrauben eines Messgerätegehäuses (127) eingerichtet ist, um das Messgerätegehäuse an dem Flansch zu befestigen.

5. Messgerät (100) nach einem der vorhergehenden Ansprüche, weiter aufweisend:
eine innenliegende, umlaufende Dichtung (101), welche zwischen dem Messgerätegehäuse (127) und dem Flansch (104, 115) angeordnet ist.

6. Messgerät (100) nach einem der vorhergehenden Ansprüche, weiter aufweisend:
eine zweite Spann- oder Spreitzvorrichtung (107, 110, 116, 117);
wobei beide Spann- oder Spreitzvorrichtungen an dem Flansch (104, 115) gegenüber voneinander angebracht sind.

7. Messgerät (100) nach einem der Ansprüche 1 bis 5, weiter aufweisend:
eine zweite und eine dritte Spann- oder Spreitzvorrichtung (107, 110, 116, 117);
wobei sämtliche Spann- oder Spreitzvorrichtungen an dem Flansch (104, 115) im selben radialen Abstand zum Mittelpunkt (130) des Flansches angebracht sind.

8. Behälter (106) mit einem daran angebrachten Messgerät (100) nach einem der Ansprüche 1 bis 7.

9. Behälter (106) nach Anspruch 8, ausgeführt als Kunststoffbehälter.

## Claims

1. Measuring device (100) configured to be mounted on or in an opening of a container (106), comprising:
a flange (115) configured to rest on the top (111) of a wall (112) of the container enclosing the opening of the container;
a clamping or spreading device (110, 116) configured to adjust and apply a clamping or spreading force to the underside (113) of the wall to secure the flange to the opening of the container;
**characterized in that**
the clamping or spreading device (110, 116) comprises a clamping screw (122) and a clamping element (116) which can be displaced in the direction of the flange underside (120) by rotation of the clamping screw to exert the clamping force, and a frame (110) in which the clamping screw (122) is held, and which together with the clamping screw can be displaced along a slot-like recess (123) in the flange (115).

2. Measuring device (100) configured to be mounted on or in an opening of a container (106), comprising:
a flange (104) configured to rest on the top (111) of a wall (112) of the container enclosing the opening of the container;
a clamping or spreading device (107, 117) configured to adjust and apply a clamping or spreading force to the inside (114) of the opening of the container to secure the flange to the opening of the container;
**characterized in that** the flange (104) comprises
an opening (118);
a flange bottom (120) configured to rest on the top (111) of a wall (112) of the container enclosing the opening of the container;
a clamping nut (103) attached to an external thread (102) of the measuring device housing (127);
wherein clamping or spreading device (107, 117) comprises a spreading bracket (107);
wherein the flange (104) is disposed between the clamping nut and the spreading bracket so that when the clamping nut is screwed in and spreads the latter radially outwardly to generate the spreading force the flange presses against the spreading bracket.

3. Measuring device (100) according to claim 1 or claim 2, further comprising
a flange gasket (105, 125) arranged on the flange bottom (120) and configured to be pressed against the top (111)of the wall (112) of the container (106)when the clamping force or spreading force is exerted.

4. Measuring device (100) according to any one of the preceding claims,
wherein the flange (104, 115) has an internally threaded opening (118) configured for screwing in a measuring device housing (127) to secure the measuring device housing to the flange.

5. Measuring device (100) according to any one of the preceding claims, further comprising:
an internal circumferential seal (101) disposed between the measuring device housing (127) and the flange (104, 115).

6. Measuring device (100) according to any one of the preceding claims, further comprising:
a second clamping or spreading device (107, 110, 116, 117);
wherein both clamping or spreading devices are mounted on the flange (104, 115) opposite each other.

7. Measuring device (100) according to any one of claims 1 to 5, further comprising:
a second and a third clamping or spreading device (107, 110, 116, 117);
wherein all of the clamping or spreading devices are mounted on the flange (104, 115) at the same radial distance from the center point (130) of the flange.

8. Container (106) with a measuring device (100) attached thereto according to any one of claims 1 to 7.

9. Container (106) according to claim 8, embodied as a plastic container.

## Revendications

1. Appareil de mesure (100) conçu pour être monté sur une ouverture d'un récipient (106), présentant :
une bride (115) conçue pour reposer sur la face supérieure (111) d'une paroi (112) du récipient qui entoure l'ouverture du récipient ;
un dispositif de serrage ou d'expansion (110, 116) conçu pour régler et exercer une force de serrage ou d'expansion sur la face inférieure (113) de la paroi pour fixer la bride à l'ouverture du récipient ;
**caractérisé en ce que**
le dispositif de serrage ou d'expansion (110, 116) présente une vis de serrage (122) et un élément de serrage (116) qui peut être déplacé en direction de la face inférieure de bride (120) en faisant tourner la vis de serrage pour exercer la force de serrage, et un cadre (110) dans lequel la vis de serrage (122) est maintenue et qui peut être déplacé avec la vis de serrage le long d'un évidement en forme de fente (123) dans la bride (115).

2. Appareil de mesure (100) conçu pour être monté dans une ouverture d'un récipient (106), présentant :
une bride (104) conçue pour reposer sur la face supérieure (111) d'une paroi (112) du récipient qui entoure l'ouverture du récipient ;
un dispositif de serrage ou d'expansion (107, 117) conçu pour régler et exercer une force de serrage ou d'expansion sur la face intérieure (114) de l'ouverture du récipient pour fixer la bride à l'ouverture du récipient ;
**caractérisé en ce que** la bride (104) présente :
une ouverture (118),
une face inférieure de bride (120) conçue pour reposer sur la face supérieure (111) de la paroi (112) du récipient qui entoure l'ouverture du récipient ;
un écrou de serrage (103) monté sur un filetage extérieur (102) du boîtier d'appareil de mesure (127) ;
dans lequel le dispositif de serrage ou d'expansion (110, 116) présente un étrier expansible (107) ;
dans lequel la bride (104) est disposée entre l'écrou de serrage et l'étrier expansible, de sorte que, lors du vissage de l'écrou de serrage, la bride exerce une pression contre l'étrier expansible et l'écarte radialement vers l'extérieur pour produire la force d'expansion.

3. Appareil de mesure (100) selon la revendication 1 ou 2, présentant en outre :
un joint d'étanchéité de bride (105, 125) disposé sur la face inférieure de bride (120) et conçu pour être pressé contre la face supérieure (111) de la paroi (112) du récipient (106) lors de l'exercice de la force de serrage ou d'expansion.

4. Appareil de mesure (100) selon l'une des revendications précédentes,
dans lequel la bride (104, 115) présente une ouverture (118) munie d'un filetage intérieur, qui est conçue pour le vissage d'un boîtier d'appareil de mesure (127) afin de fixer le boîtier d'appareil de mesure à la bride.

5. Appareil de mesure (100) selon l'une des revendications précédentes, présentant en outre :
un joint d'étanchéité périphérique intérieur (101) disposé entre le boîtier d'appareil de mesure (127) et la bride (104, 115) .

6. Appareil de mesure (100) selon l'une des revendications précédentes, présentant en outre :
un deuxième dispositif de serrage ou d'expansion (107, 110, 116, 117) ;
dans lequel les deux dispositifs de serrage ou d'expansion sont montés sur la bride (104, 115) en face l'un de l'autre.

7. Appareil de mesure (100) selon l'une des revendications 1 à 5, présentant en outre :
un deuxième et un troisième dispositif de serrage ou d'expansion (107, 110, 116, 117) ;
dans lequel tous les dispositifs de serrage ou d'expansion sont montés sur la bride (104, 115) à la même distance radiale du centre (130) de la bride.

8. Récipient (106) sur lequel est monté un appareil de mesure (100) selon l'une des revendications 1 à 7.

9. Récipient (106) selon la revendication 8, réalisé sous la forme d'un récipient en matière plastique.
